# FASCICULE DE BREVET EUROPEEN

(11) **EP 3 311 944 B1**
(45) Date de publication et mention de la délivrance du brevet: **01.06.2022**
(21) Numéro de dépôt: 17192664.5
(22) Date de dépôt: 22.09.2017
(51) Int. Cl.: B23C 3/10

(54) **PROCEDE D'USINAGE D'UNE ALVEOLE D'UN PANNEAU RAIDI**
MASCHINELLES BEARBEITUNGSVERFAHREN EINER ZELLE EINER VERSTEIFUNGSPLATTE
METHOD FOR MACHINING A CELL OF A STIFFENED PANEL

(30) Priorité: 19.10.2016 FR 1660115
(43) Date de publication de la demande: 25.04.2018
(73) Titulaire: Airbus Operations S.A.S., 31060 Toulouse (FR)
(72) Inventeur: LHOPITAL, Vincent, 44690 SAINT FIACRE SUR MAINE (FR); NIVET, Damien, 44260 PRINQUIAU (FR)
(74) Mandataire: Gicquel, Olivier Yves Gérard

(56) Documents cités:
- EP-A1- 1 595 638
- EP-A2- 2 036 670
- WO-A1-02/066189
- US-B1- 6 352 496

## Description

La présente demande se rapporte à un procédé d'usinage d'une alvéole d'un panneau raidi. Un panneau raidi comprend une paroi et un réseau de nervures perpendiculaires à la paroi et agencées entre elles de manière à former des alvéoles. Dans le cas d'un panneau raidi de type isogrid, toutes les alvéoles ont un contour en forme de triangle équilatéral.

Pour la suite de la description, un axe Z correspond à un axe perpendiculaire à la paroi et parallèle aux nervures.

Selon un mode de réalisation, le panneau raidi est réalisé à partir d'une plaque épaisse qui est usinée pour évider les alvéoles.

Pour chaque alvéole, un procédé d'usinage comprend une phase d'ébauche qui consiste à retirer le maximum de matière pour obtenir une alvéole semi-finie avec des dimensions proches des dimensions finales de l'alvéole et une phase de finition qui consiste à usiner l'alvéole aux dimensions finales.

Pour la phase d'ébauche, on utilise un outil de coupe pourvu de plaquettes amovibles qui tourne selon un axe de rotation parallèle à l'axe Z et qui a un diamètre d'environ 32 mm. Selon une stratégie de déplacement, l'outil de coupe réalise plusieurs passes successives et identiques, décalées selon l'axe Z. Pour chaque passe, l'outil de coupe suit une trajectoire qui comprend trois triangles concentriques, en commençant par le triangle le plus petit et en finissant par le triangle plus grand. Pour passer d'une passe à l'autre, l'outil de coupe se translate parallèlement à l'axe Z

Le diamètre relativement important de l'outil de coupe permet d'obtenir un débit de matière retirée important. Toutefois, plus le diamètre de l'outil de coupe de la phase d'ébauche est important plus la quantité de matière conservée au niveau de chaque angle à l'issue de la phase d'ébauche est importante ce qui conduit à accroitre la durée de la phase de finition. Pour réduire la durée de la phase de finition, une solution consiste à utiliser un outil de coupe avec un diamètre inférieur, de l'ordre de 25 mm, pour retirer plus de matière au niveau des angles. Toutefois, avec ce diamètre et en utilisant une stratégie de déplacement telle que décrite précédemment, le débit de matière retirée est réduit et la durée de la phase d'ébauche est augmentée de plus de 50%.

La présente invention vise à remédier aux inconvénients de l'art antérieur. Le document EP-A-2036670 montre le préambule de la revendication 1.

A cet effet, l'invention a pour objet un procédé d'usinage d'une alvéole de forme triangulaire d'un panneau raidi, ledit procédé comportant une phase d'ébauche réalisée en utilisant un outil de coupe qui a un diamètre de l'ordre de 25 mm pour obtenir une alvéole intermédiaire et une phase de finition pour obtenir une alvéole finie à partir de l'alvéole intermédiaire, l'alvéole intermédiaire étant délimitée par un fond et des parois latérales.

Selon l'invention, le procédé d'usinage se caractérise en ce que la phase d'ébauche comprend plusieurs passes successives parallèles au fond et en ce que pour chaque passe, l'outil de coupe effectue un balayage en suivant des droites parallèles à une première paroi latérale jusqu'à atteindre un angle opposé à la première paroi latérale, puis un lissage en se déplaçant successivement le long des parois latérales.

Le fait d'utiliser un outil de coupe avec un diamètre de l'ordre de 25 mm permet de retirer plus de matière dans les angles par rapport à un outil de coupe avec un diamètre de 32 mm. La quantité de matière à retirer étant moindre, la durée de la phase de finition est réduite. Cette stratégie de déplacement permet de réduire le temps de réalisation de la phase d'ébauche.

Selon une autre caractéristique, entre chaque passe, l'outil de coupe plonge dans la matière en combinant un mouvement parallèle à l'axe de rotation et un mouvement le long d'une deuxième paroi latérale, jusqu'à atteindre un point disposé dans le prolongement de l'axe de l'outil de coupe lorsque ce dernier est tangent aux première et deuxième parois latérales.

Selon une variante, entre deux passes successives, l'outil de coupe réalise une plongée qui combine une rotation de l'outil de coupe autour de l'axe de rotation et un mouvement de translation perpendiculaire au fond.

Selon une autre variante, entre deux passes successives, l'outil de coupe réalise une plongée en interpolation qui combine une rotation de l'outil de coupe autour de l'axe de rotation, un mouvement de rotation de l'axe de rotation autour d'un axe parallèle à l'axe de rotation et un mouvement de translation perpendiculaire au fond.

Selon une autre variante, entre deux passes successives, l'outil de coupe réalise une plongée en pente qui combine une rotation de l'outil de coupe autour de l'axe de rotation, un mouvement de translation parallèle au fond et un mouvement de translation perpendiculaire au fond. De préférence, la plongée en pente a une pente qui forme un angle d'environ 6 à 7° avec le fond.

Selon une autre caractéristique, préalablement aux passes, l'outil de coupe réalise une plongée en interpolation sur toute la hauteur de l'alvéole intermédiaire pour créer un puits dans lequel se translate l'outil de coupe entre chaque passe.

D'autres caractéristiques et avantages ressortiront de la description de l'invention qui va suivre, description donnée à titre d'exemple uniquement, en regard des dessins annexés sur lesquels :
- La figure 1 est une vue en perspective d'un panneau raidi de type isogrid,
- La figure 2 est une vue de dessus qui illustre en trait fort une alvéole finie et en pointillé une alvéole semi-finie, obtenue après une phase d'ébauche,
- La figure 3 est une vue latérale d'un outil de coupe qui illustre un mode de réalisation de l'invention, et
- Les figures 4 à 10 sont des vues en perspective montrant différentes stratégies de déplacement d'un outil de coupe selon l'invention.

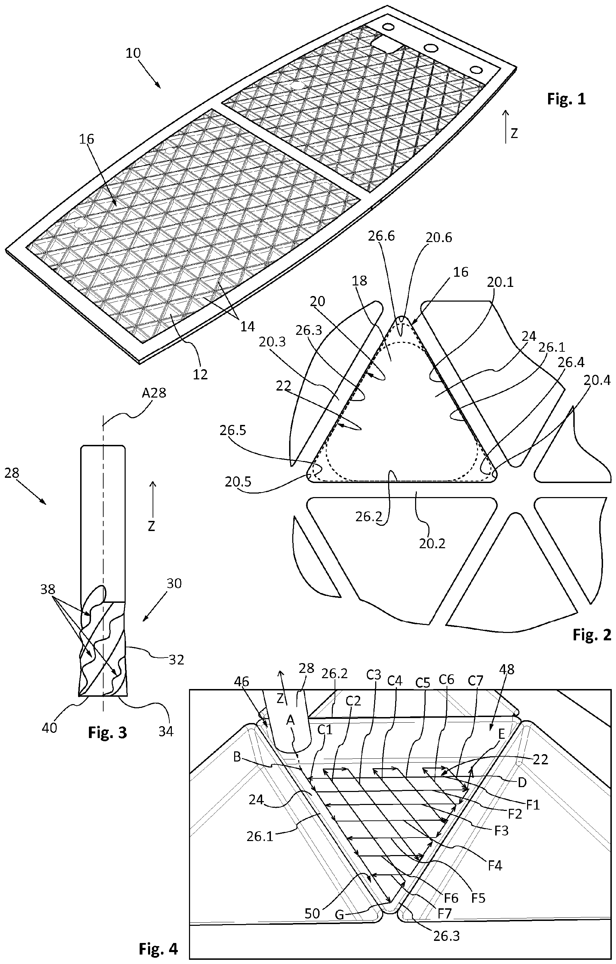

Comme illustré par les figures 1 et 2, un panneau raidi 10 comprend une paroi 12 et un réseau de nervures 14 perpendiculaires à la paroi 12 et agencées entre elles de manière à former des alvéoles 16 de forme triangulaire.

A l'état fini visible en trait fort sur la figure 2, chaque alvéole 16 est délimitée par un fond 18 plat et un contour 20 qui comprend des parois latérales 20.1, 20.2 et 20.3 planes et reliées deux à deux par des parois courbes 20.4, 20.5 et 20.6. Les parois latérales 20.1, 20.2 et 20.3 ainsi que les parois courbes 20.4, 20.5 et 20.6 sont parallèles à l'axe Z qui est perpendiculaire au fond 18. Selon une configuration illustrée par la figure 2, dans le cas d'un panneau raidi de type isogrid, chaque alvéole comprend trois parois latérales 20.1, 20.2 et 20.3 qui forment entre elles des angles égaux de 60° et les parois courbes 20.4, 20.5 et 20.6 suivent chacune dans un plan parallèle au fond 18 un rayon de courbure inférieur à 20 mm. Bien entendu, l'invention n'est pas limitée à cette géométrie pour les alvéoles.

Chaque alvéole est obtenue par un procédé d'usinage qui comprend une phase d'ébauche permettant d'obtenir une alvéole semi-finie 22 représentée en pointillée sur la figure 2 qui a des dimensions légèrement inférieures à l'alvéole 16 finie et une phase de finition permettant d'obtenir l'alvéole 16 finie aux cotes souhaitées.

La phase de finition n'est pas plus détaillée car elle peut être réalisée en utilisant les mêmes outils et les mêmes procédés d'usinage que pour l'art antérieur.

L'alvéole semi-finie 22 est délimitée par un fond 24 (parallèle au fond 18 fini) et un contour 26 qui comprend des parois latérales 26.1, 26.2 et 26.3 planes (respectivement parallèles aux parois latérales 20.4, 20.5 et 20.6 finies) et reliées deux à deux par des parois courbes 26.4, 26.5 et 26.6.

Pour la phase d'ébauche, le procédé d'usinage utilise un outil de coupe 28 qui a un diamètre de l'ordre de 25 mm et qui tourne selon un axe de rotation A28 parallèle à l'axe Z.

Le fait d'utiliser un outil de coupe avec un diamètre de l'ordre de 25 mm permet de retirer plus de matière dans les angles par rapport à un outil de coupe avec un diamètre de 32 mm. La quantité de matière à retirer étant moindre, la durée de la phase de finition est réduite. L'outil de coupe 28 comprend d'une part un corps 30 approximativement cylindrique délimité par une paroi périphérique 32 cylindrique dont l'axe correspond à l'axe de rotation A28 et une paroi terminale 34 plane perpendiculaire à l'axe de rotation, et d'autre part une queue 36 qui prolonge le corps à l'opposé de la paroi terminale 34 et qui est configurée pour relier l'outil de coupe 28 à un porte-outil.

Selon une caractéristique de l'invention, l'outil de coupe 28 comprend des premières arêtes de coupe 38 hélicoïdales prévues sur la paroi périphérique 32 et des deuxièmes arêtes de coupe 40 prévues sur la paroi terminale 34.

Les deuxièmes arêtes de coupe 40 s'étendent à partir de l'axe de rotation A28 jusqu'à la paroi périphérique 32.

Chaque première arête de coupe 38 s'étend sur la hauteur de la paroi périphérique 32 jusqu'à la paroi terminale 34 et suit une ligne moyenne en forme d'hélice, les premières arêtes de coupe 38 étant régulièrement réparties sur la circonférence de la paroi périphérique 32. Selon la configuration illustrée par la figure 3, l'outil de coupe 28 comprend trois premières arêtes de coupe 38. Chaque première arête de coupe 38 suit un profil qui ondule de part et d'autre de la ligne moyenne. Cette configuration permet d'obtenir une meilleure fragmentation des copeaux lors de l'usinage.

Sur la figure 4, on a représenté une première stratégie de déplacement de l'outil de coupe 28 pour réaliser l'alvéole semi-finie 22.

Selon cette première stratégie de déplacement, l'alvéole semi-finie 22 est obtenue en réalisant plusieurs passes successives, parallèles au fond 24.

Au départ, l'outil de coupe 28 est positionné au point A situé à l'aplomb et au-dessus d'un premier angle 46 prévu à l'extrémité d'une première paroi latérale 26.1. L'outil de coupe 28 effectue une première plongée, parallèle à l'axe Z, en pénétrant dans la matière sur une hauteur correspondant à la profondeur d'une passe (de l'ordre de quelques millimètres) jusqu'à un point B. Lors d'une première passe, l'outil de coupe 28 en conservant la même hauteur (position selon l'axe Z) suit des droites C1 à C7 parallèles à la première paroi latérale 26.1 en allant d'une deuxième paroi latérale 26.2 à une troisième paroi latérale 26.3, jusqu'à atteindre un point D situé au niveau du deuxième angle 48 opposé à la première paroi latérale 26.1. Au point D, l'outil de coupe 28 se déplace alors selon une direction parallèle à l'axe Z et pénètre dans la matière sur une hauteur correspondant à la profondeur de la passe jusqu'à un point E.

Lors d'une deuxième passe, l'outil de coupe 28 suit, en conservant la même hauteur, des droites F1 à F6 parallèles à la deuxième paroi latérale 26.2 en allant de la troisième paroi latérale 26.3 à la première paroi latérale 26.1, jusqu'à atteindre un point G situé au niveau du deuxième angle 50 opposé à la deuxième paroi latérale 26.2.

Au point G, l'outil de coupe 28 se déplace selon une direction parallèle à l'axe Z et pénètre dans la matière sur une hauteur correspondant à la profondeur de la passe. Lors d'une troisième passe, l'outil de coupe 28 suit, en conservant la même hauteur, des droites parallèles à la troisième paroi latérale 26.3 en allant de la première paroi latérale 26.1 à la deuxième paroi latérale 26.2, jusqu'à atteindre le premier angle 46 opposé à la troisième paroi latérale 26.3.

Cette succession de passes est répétée jusqu'à atteindre le fond 24 de l'alvéole semi-finie 22.

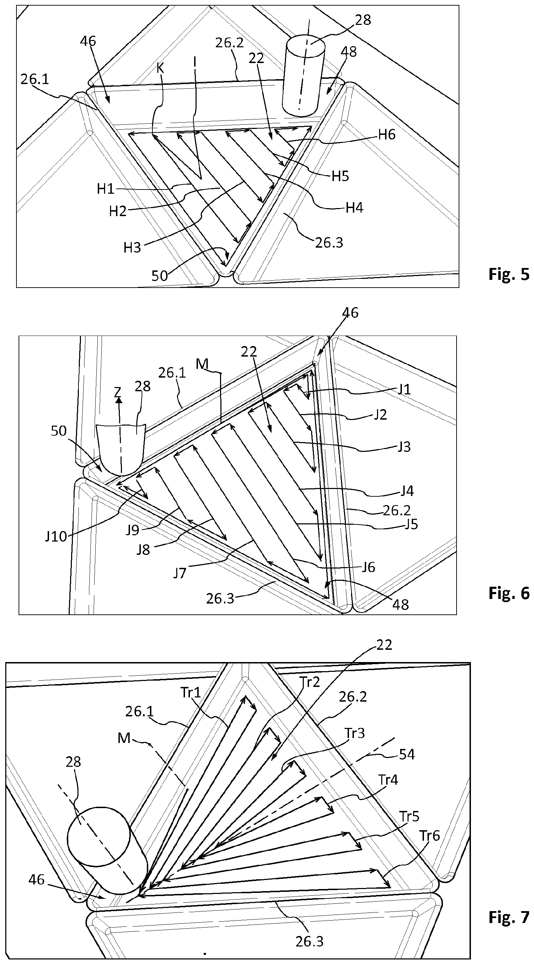

Sur la figure 5, on a représenté une deuxième stratégie de déplacement de l'outil de coupe 28 pour réaliser l'alvéole semi-finie 22.

Selon cette deuxième stratégie de déplacement, l'alvéole semi-finie 22 est obtenue en réalisant plusieurs passes successives, parallèles au fond 24.

L'outil de coupe 28 est positionné à l'aplomb du centre I de l'alvéole semi-finie 22 juste au-dessus de la matière. L'outil de coupe 28 plonge alors dans la matière en combinant un mouvement parallèle à l'axe Z et un mouvement du centre I vers un premier angle 46 prévu à l'extrémité des première et deuxième parois latérales 26.1, 26.2 jusqu'à un point K disposé sur la bissectrice du premier angle 46 et dans le prolongement de l'axe de rotation A28 de l'outil de coupe 28 lorsqu'il est tangent aux première et deuxième parois latérales 26.1, 26.2. Ainsi, le point K est équidistant des première et deuxième parois latérales 26.1, 26.2 à une distance d sensiblement égale au diamètre de l'outil de coupe 28.

Lors d'une première passe et en conservant la même hauteur, l'outil de coupe 28 effectue un balayage en suivant des droites H1 à H6 parallèles à la première paroi latérale 26.1, en allant d'une deuxième paroi latérale 26.2 à une troisième paroi latérale 26.3, jusqu'à atteindre le deuxième angle 48 opposé à la première paroi latérale 26.1. L'outil de coupe 28 effectue un lissage en se déplaçant successivement le long des trois parois latérales 26.1, 26.2, 26.3. Pour atteindre la passe suivante, l'outil de coupe 28 plonge dans la matière en combinant un mouvement parallèle à l'axe Z et un mouvement le long de la deuxième paroi latérale 26.2 jusqu'à atteindre le point K.

Lors de chaque passe suivante, l'outil de coupe 28 effectue un balayage et un lissage identiques à la première passe.

Sur la figure 6, on a représenté une troisième stratégie de déplacement de l'outil de coupe 28 pour réaliser l'alvéole semi-finie 22.

Selon cette troisième stratégie de déplacement, l'alvéole semi-finie 22 est obtenue en réalisant plusieurs passes successives, parallèles au fond 24.

Au départ, l'outil de coupe 28 est positionné à l'aplomb du milieu M de la première paroi latérale 26.1. Pour atteindre la profondeur de la première passe, l'outil de coupe 28 plonge dans la matière en combinant un mouvement parallèle à l'axe Z et un mouvement le long de la première paroi 26.1 pour atteindre le premier angle 46.

Lors de la première passe, l'outil de coupe 28 effectue un balayage en suivant des droites J1 à J10 perpendiculaires à la première paroi 26.1, en partant du premier angle 46 jusqu'au troisième angle 50, et un lissage en se déplaçant successivement le long des trois parois latérales 26.1, 26.2, 26.3.

Pour atteindre la passe suivante, l'outil de coupe 28 plonge en combinant un mouvement parallèle à l'axe Z et un mouvement le long de la première paroi 26.1 pour atteindre le premier angle 46.

Lors de chaque passe suivante, l'outil de coupe 28 effectue un balayage et un lissage identiques à la première passe.

Sur la figure 7, on a représenté une quatrième stratégie de déplacement de l'outil de coupe 28 pour réaliser l'alvéole semi-finie 22.

Selon cette quatrième stratégie de déplacement, l'alvéole semi-finie 22 est obtenue en réalisant plusieurs passes successives, parallèles au fond 24.

Au départ, l'outil de coupe 28 est positionné à l'aplomb du milieu M de la première paroi latérale 26.1. Pour atteindre la profondeur de la première passe, l'outil de coupe 28 plonge dans la matière en combinant un mouvement parallèle à l'axe Z et un mouvement le long de la première paroi 26.1 pour atteindre le premier angle 46.

Lors de la première passe, l'outil de coupe 28 effectue un balayage en formant des triangles Tr1 à Tr6 juxtaposés qui ont un sommet positionné sur la bissectrice 54 du premier angle 46 et un côté opposé parallèle à la deuxième paroi latérale 26.2.

A l'issue de la première passe, l'outil de coupe est repositionné à l'aplomb du milieu M de la première paroi latérale 26.1. Pour atteindre la profondeur de la passe suivante, l'outil de coupe 28 plonge dans la matière en combinant un mouvement parallèle à l'axe Z et un mouvement le long de la première paroi 26.1 pour atteindre le premier angle 46.

Lors de chaque passe suivante, l'outil de coupe 28 décrit une trajectoire identique à la première passe.

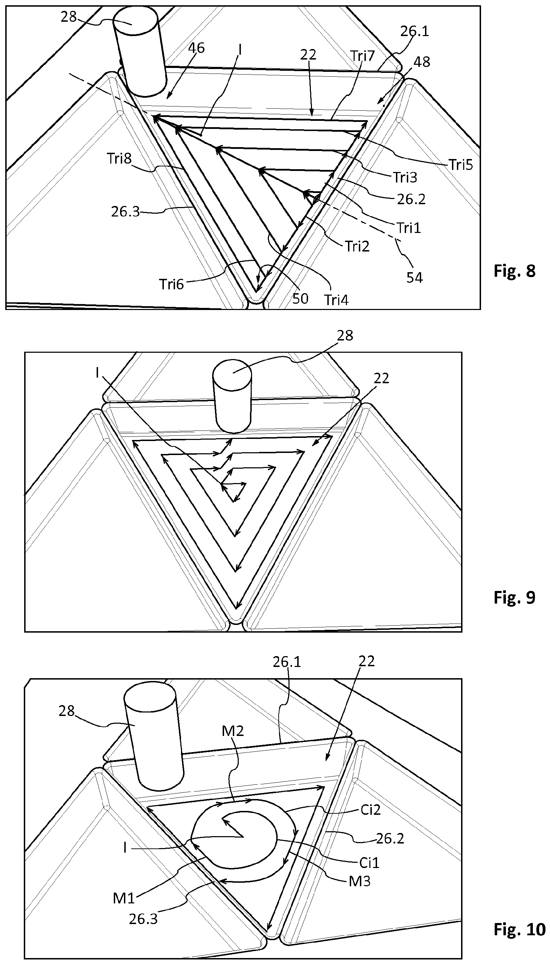

Sur la figure 8, on a représenté une cinquième stratégie de déplacement de l'outil de coupe 28 pour réaliser l'alvéole semi-finie 22.

Selon cette cinquième stratégie de déplacement, l'alvéole semi-finie 22 est obtenue en réalisant plusieurs passes successives, parallèles au fond 24.

Au départ, l'outil de coupe 28 est positionné à l'aplomb du centre I de l'alvéole semi-finie 22 juste au-dessus de la matière. Pour atteindre la profondeur de la première passe, l'outil de coupe 28 plonge alors dans la matière en combinant un mouvement parallèle à l'axe Z et un mouvement du centre I vers un premier angle 46 prévu à l'extrémité d'une première paroi latérale 26.1.

Lors de la première passe, l'outil de coupe 28 effectue un balayage en formant des triangles Tri1 à Tri8 en alternant un triangle de part et d'autre de la bissectrice 54 du premier angle 46 et en augmentant progressivement les dimensions des triangles Tri1 à Tri8.

Sur la figure 9, on a représenté une sixième stratégie de déplacement de l'outil de coupe 28 pour réaliser l'alvéole semi-finie 22. Selon cette sixième stratégie de déplacement, l'alvéole semi-finie 22 est obtenue en réalisant plusieurs passes successives, parallèles au fond 24.

Au départ, l'outil de coupe 28 est positionné à l'aplomb et au-dessus du centre I de l'alvéole semi-finie 22. En suivant, il effectue une plongée en interpolation dans la matière jusqu'à atteindre le fond 24 pour former un puits approximativement au centre de l'alvéole semi-finie 22. Par interpolation, on entend que l'outil de coupe 28 combine deux mouvements de rotation, un premier mouvement de rotation autour de l'axe de rotation et un deuxième mouvement de rotation de l'axe de rotation autour d'un axe parallèle à l'axe de rotation. Dans le cas d'une plongée en interpolation, l'outil de coupe 28 combine deux mouvements de rotation et un mouvement de translation parallèle à l'axe Z.

Lorsque l'outil de coupe 28 a atteint le fond 24, il revient à la hauteur de la première passe.

Pour chaque passe, l'outil de coupe 28 se déplace en partant du centre I de l'alvéole semi-finie 22 et en décrivant des triangles concentriques. Entre chaque passe, l'outil de coupe 28 se repositionne dans le puits puis se translate parallèlement à l'axe Z, jusqu'à atteindre la hauteur de la passe suivante.

Sur la figure 10, on a représenté une septième stratégie de déplacement de l'outil de coupe 28 pour réaliser l'alvéole semi-finie 22.

Selon cette septième stratégie de déplacement, l'alvéole semi-finie 22 est obtenue en réalisant plusieurs passes successives, parallèles au fond 24.

Au départ, l'outil de coupe 28 est positionné à l'aplomb et au-dessus du centre I de l'alvéole semi-finie 22. Pour atteindre la profondeur de la première passe, il effectue une plongée en interpolation dans la matière, à proximité du centre I, pour atteindre la hauteur de la première passe.

Lors de la première passe, l'outil de coupe 28 suit des trajectoires circulaires concentriques Ci1, Ci2 en partant du centre I et en augmentant progressivement le diamètre des cercles. Lorsque la trajectoire circulaire est sécante aux parois latérales 26.1, 26.2, 26.3, la trajectoire circulaire comprend des méplats M1 à M3. Lorsque les méplats M1 à M3 deviennent prépondérants, l'outil de coupe 28 effectue un lissage en se déplaçant successivement le long des trois parois latérales 26.1, 26.2, 26.3.

A l'issue de la première passe, l'outil de coupe 28 est repositionné au niveau du centre I de l'alvéole semi-finie 22. Pour atteindre la profondeur de la passe suivante, l'outil de coupe 28 effectue une plongée en interpolation dans la matière pour atteindre la hauteur de la passe suivante.

Lors de chaque passe suivante, l'outil de coupe 28 décrit une trajectoire identique à la première passe.

Pour toutes les stratégies de déplacement, le passage d'une passe à l'autre est obtenu par une plongée en interpolation qui combine la rotation de l'outil autour de l'axe de rotation, un mouvement de rotation de l'axe de rotation autour d'un axe parallèle à l'axe de rotation et un mouvement de translation parallèle à l'axe Z. Selon une troisième variante, le passage d'une passe à l'autre est obtenu par une plongée en pente qui combine la rotation de l'outil autour de l'axe de rotation, un mouvement de translation selon une direction perpendiculaire à l'axe Z et un mouvement de translation parallèle à l'axe Z.

De préférence, la pente de la plongée forme un angle d'environ 6 à 7° avec le fond 24. Lors de la longée en pente, l'outil se déplace le long de celle des parois latérales 26.1, 26.2, 26.3 qui correspond à la plus grande dimension de l'alvéole dans un plan perpendiculaire à l'axe Z. Selon une autre variante, la stratégie de déplacement comprend, préalablement aux passes, une plongée en interpolation sur toute la hauteur de l'alvéole intermédiaire 22 pour créer un puits (52) dans lequel se translate l'outil entre chaque passe.

## Revendications

1. Procédé d'usinage d'une alvéole de forme triangulaire d'un panneau raidi, ledit procédé comportant une phase d'ébauche réalisée en utilisant un outil de coupe (28) qui a un axe de rotation (A28) et un diamètre de l'ordre de 25 mm pour obtenir une alvéole intermédiaire (22) et une phase de finition pour obtenir une alvéole (16) finie à partir de l'alvéole intermédiaire (22), l'alvéole intermédiaire (22) étant délimitée par un fond (24) et des parois latérales (26.1, 26.2, 26.3), ledit procédé d'usinage étant **caractérisé en ce que** la phase d'ébauche comprend plusieurs passes successives parallèles au fond (24) et **en ce que** pour chaque passe, l'outil de coupe (28) effectue un balayage en suivant des droites (H1 à H6) parallèles à une première paroi latérale (26.1) jusqu'à atteindre un angle (48) opposé à la première paroi latérale (26.1), puis un lissage en se déplaçant successivement le long des parois latérales (26.1, 26.2, 26.3).

2. Procédé d'usinage selon la revendication 1, **caractérisé en ce qu'**entre chaque passe, l'outil de coupe (28) plonge dans la matière en combinant un mouvement parallèle à l'axe de rotation (A28) et un mouvement le long d'une deuxième paroi latérale (26.2) jusqu'à atteindre un point (K) disposé dans le prolongement de l'axe de rotation (A28) de l'outil de coupe (28) lorsque ledit outil de coupe (28) est tangent aux première et deuxième parois latérales (26.1, 26.2).

3. Procédé d'usinage selon l'une des revendications précédentes, **caractérisé en ce qu'**entre deux passes successives, l'outil de coupe (28) réalise une plongée qui combine une rotation de l'outil de coupe (28) autour de l'axe de rotation et un mouvement de translation perpendiculaire au fond (24).

4. Procédé d'usinage selon l'une des revendications 1 à 2, **caractérisé en ce qu'**entre deux passes successives, l'outil de coupe (28) réalise une plongée en interpolation qui combine une rotation de l'outil de coupe (28) autour de l'axe de rotation, un mouvement de rotation de l'axe de rotation autour d'un axe parallèle à l'axe de rotation et un mouvement de translation perpendiculaire au fond (24).

5. Procédé d'usinage selon l'une des revendications 1 à 2, **caractérisé en ce qu'**entre deux passes successives, l'outil de coupe (28) réalise une plongée en pente qui combine une rotation de l'outil de coupe (28) autour de l'axe de rotation, un mouvement de translation parallèle au fond (24) et un mouvement de translation perpendiculaire au fond (24).

6. Procédé d'usinage selon la revendication précédente, **caractérisé en ce que** la plongée en pente a une pente qui forme un angle d'environ 6 à 7° avec le fond (24).

7. Procédé d'usinage selon la revendication 1 ou 2, **caractérisé en ce que** préalablement aux passes, l'outil de coupe (28) réalise une plongée en interpolation sur toute la hauteur de l'alvéole intermédiaire (22) pour créer un puits dans lequel se translate l'outil de coupe (28) entre chaque passe.

## Patentansprüche

1. Verfahren zur Bearbeitung einer dreieckig geformten Zelle einer Versteifungsplatte, wobei das Verfahren eine Schruppphase, die unter Verwendung eines Schneidwerkzeugs (28) mit einer Drehachse (A28) und einen Durchmesser in der Größenordnung von 25 mm durchgeführt wird, um eine Zwischenzelle (22) zu erhalten, und eine Endbearbeitungsphase umfasst, um aus der Zwischenzelle (22) eine fertige Zelle (16) zu erhalten, wobei die Zwischenzelle (22) durch einen Boden (24) und Seitenwände (26.1, 26.2, 26.3) begrenzt ist, wobei das Bearbeitungsverfahren **dadurch gekennzeichnet, ist, dass** die Schruppphase aufeinanderfolgende, zum Boden (24) parallele Durchgänge umfasst und dass das Schneidwerkzeug (28) für jeden Durchgang eine Abtastung entlang von zu einer ersten Seitenwand (26.1) parallelen Geraden (H1 bis H6) durchführt, bis es einen Winkel (48) gegenüber der ersten Seitenwand (26.1) erreicht, und dann eine Glättung durchführt, indem es sich sukzessiv entlang der Seitenwände (26.1, 26.2, 26.3) bewegt.

2. Bearbeitungsverfahren nach Anspruch 1, **dadurch gekennzeichnet, dass** das Schneidwerkzeug (28) zwischen jedem Durchgang in das Material einsticht, indem es eine zur Drehachse (A28) parallele Bewegung und eine Bewegung entlang einer zweiten Seitenwand (26.2) kombiniert, bis es einen Punkt (K) erreicht, der in der Verlängerung der Drehachse (A28) des Schneidwerkzeugs (28) angeordnet ist, wenn das Schneidwerkzeug (28) tangential zur ersten und zur zweiten Seitenwand (26.1, 26.2) angeordnet ist.

3. Bearbeitungsverfahren nach einem der vorangehenden Ansprüche, **dadurch gekennzeichnet, dass** das Schneidwerkzeug (28) zwischen zwei aufeinanderfolgenden Durchgängen einen Einstich durchführt, der eine Drehung des Schneidwerkzeugs (28) um die Drehachse und eine zum Boden (24) senkrechte translatorische Bewegung kombiniert.

4. Bearbeitungsverfahren nach einem der Ansprüche 1 bis 2, **dadurch gekennzeichnet, dass** das Schneidwerkzeug (28) zwischen zwei aufeinanderfolgenden Durchgängen einen Interpolationseinstich durchführt, der eine Drehung des Schneidwerkzeugs (28) um die Drehachse, eine Drehbewegung der Drehachse um eine zur Drehachse parallele Achse und eine zum Boden (24) senkrechte translatorische Bewegung kombiniert.

5. Bearbeitungsverfahren nach einem der Ansprüche 1 bis 2, **dadurch gekennzeichnet, dass** das Schneidwerkzeug (28) zwischen zwei aufeinanderfolgenden Durchgängen einen schrägen Einstich durchführt, der eine Drehung des Schneidwerkzeugs (28) um die Drehachse, eine zum Boden (24) parallele translatorische Bewegung und eine zum Boden (24) senkrechte translatorische Bewegung kombiniert.

6. Bearbeitungsverfahren nach dem vorangehenden Anspruch, **dadurch gekennzeichnet, dass** der schräge Einstich eine Neigung aufweist, die mit dem Boden (24) einen Winkel von etwa 6 bis 7° bildet.

7. Bearbeitungsverfahren nach Anspruch 1 oder 2, **dadurch gekennzeichnet, dass** das Schneidwerkzeug (28) vor den Durchgängen einen Interpolationseinstich über die gesamte Höhe der Zwischenzelle (22) durchführt, um einen Schacht zu bilden, in dem sich das Schneidwerkzeug (28) zwischen jedem Durchgang bewegt.

## Claims

1. Method for machining a triangular cell of a stiffened panel, said method having a roughing phase implemented by using a cutting tool (28) which has an axis of rotation (A28) and a diameter of the order of 25 mm in order to obtain an intermediate cell (22), and a finishing phase in order to obtain a finished cell (16) from the intermediate cell (22), the intermediate cell (22) being delimited by a base (24) and lateral walls (26.1, 26.2, 26.3), said machining method being **characterized in that** the roughing phase comprises a plurality of successive passes parallel to the base (24), and **in that**, for each pass, the cutting tool (28) performs a sweeping operation by following straight lines (H1 to H6) parallel to a first lateral wall (26.1) until a corner (48) opposite the first lateral wall (26.1) is reached, then a smoothing operation by moving successively along the lateral walls (26.1, 26.2, 26.3).

2. Machining method according to Claim 1, **characterized in that**, between each pass, the cutting tool (28) plunges into the material by combining a movement parallel to the axis of rotation (A28) and a movement along a second lateral wall (26.2) until a point (K) disposed in the extension of the axis of rotation (A28) of the cutting tool (28) when said cutting tool (28) is tangential to the first and second lateral walls (26.1, 26.2) is reached.

3. Machining method according to either of the preceding claims, **characterized in that**, between two successive passes, the cutting tool (28) performs a plunging operation which combines a rotation of the cutting tool (28) about the axis of rotation and a translational movement perpendicular to the base (24).

4. Machining method according to one of Claims 1 and 2, **characterized in that**, between two successive passes, the cutting tool (28) performs a plunging operation by interpolation which combines a rotation of the cutting tool (28) about the axis of rotation, a rotational movement of the axis of rotation about an axis parallel to the axis of rotation, and a translational movement perpendicular to the base (24).

5. Machining method according to one of Claims 1 and 2, **characterized in that**, between two successive passes, the cutting tool (28) performs a sloping plunging operation which combines a rotation of the cutting tool (28) about the axis of rotation, a translational movement parallel to the base (24), and a translational movement perpendicular to the base (24).

6. Machining method according to the preceding claim, **characterized in that** the sloping plunging operation has a slope that forms an angle of about 6 to 7° with the base (24).

7. Machining method according to Claim 1 or 2, **characterized in that**, prior to the passes, the cutting tool (28) performs a plunging operation by interpolation over the entire height of the intermediate cell (22) in order to create a well in which the cutting tool (28) moves translationally between each pass.
